# EUROPÄISCHE PATENTSCHRIFT

(11) **EP 0 819 950 B1**
(45) Veröffentlichungstag und Bekanntmachung des Hinweises auf die Patenterteilung: **25.02.2004**
(21) Anmeldenummer: 97111733.8
(22) Anmeldetag: 10.07.1997
(51) Int. Cl.: G01S 17/02, G01S 7/481

(54) **Reflexionslichttaster**
Reflected light sensor
Capteur optique à réflexion

(30) Priorität: 20.07.1996 DE 19629396
(43) Veröffentlichungstag der Anmeldung: 21.01.1998
(73) Patentinhaber: Omron Corporation, Kyoto-shi, Kyoto 600-8530 (JP)
(72) Erfinder: Stauss, Gerold, 78052 VS-Villingen (DE); Ojemann, Folke, 73760 Ostfildern (DE); Kawaike, Noboru, 70569 Stuttgart-Kaltental (DE)
(74) Vertreter: Patentanwälte Ruff, Wilhelm, Beier, Dauster & Partner

(56) Entgegenhaltungen:
- WO-A-88/05900
- WO-A-93/07511
- DE-A- 3 627 972
- DE-A- 4 024 462
- DE-U- 29 502 395
- US-A- 3 897 151

## Beschreibung

Die Erfindung betrifft einen Reflexionslichttaster mit einem Lichtsender, mit einem in einem Reflexionsstrahlengang angeordneten und reflektierte Lichtstrahlen empfangenden, mit einem Teil einem Nahbereich zugeordneten und mit einem Teil einem Fernbereich zugeordneten Doppelempfänger und mit einer die Signale des Doppelempfängers auswertenden und Schaltsignale ausgebenden Auswerteeinrichtung, die in einem gemeinsamen Gerätegehäuse untergebracht sind.

Derartige Reflexionslichttaster werden beispielsweise zum Zählen von auf einer Transporteinrichtung transportierten Objekten eingesetzt. Mittels des Doppelempfängers, von welchem der eine Teil dem Nahbereich und der andere Teil dem Fernbereich zugeordnet sind, und einer Auswerteeinrichtung, wird in bekannter Weise eine Hintergrundausblendung vorgenommen, mittels der der Reflexionslichttaster auf eine Tastweite eingestellt wird. Um diese Tastweite einzustellen, ist es bekannt, entweder das Gerätegehäuse entsprechend auszurichten, oder die Einheit aus Doppelempfänger und zugehöriger Empfängerlinse innerhalb des Gerätegehäuses verstellbar anzuordnen. Im praktischen Betrieb kann es, beispielsweise aus Gründen des zur Verfügung stehenden Platzes, erforderlich sein, den Reflexionslichttaster innerhalb der Breite einer Fördereinrichtung anzuordnen, beispielsweise zwischen aufeinanderfolgenden Rollen eines Rollenförderers, so dass der Reflexionslichttaster von unten die vorbeilaufenden Objekte durch den Spalt zweier benachbarter Rollen erfasst. In diesem Fall bereiten die bekannten Reflexionslichttaster Probleme, insbesondere wenn die Objekte unterschiedliche Breiten haben und/oder sich in unterschiedlichen Positionen auf der Fördereinrichtung bewegen. Der Reflexionslichttaster müsste so ausgerichtet werden, dass auch in diesem Falle alle Objekte in dem Reflexionslichtstrahlengang liegen. Dadurch ergeben sich steile Abtastwinkel, die Ursache dafür sein können, dass nicht mehr genügend Lichtstrahlen zu dem Doppelempfänger reflektiert werden. Damit wird die Funktion der Hintergrundausblendung wegen notwendiger hoher Verstärkung ungenau, während nach wie vor Unsicherheiten beim Erkennen von Objekten im Nahbereich bestehen, da immer noch eine gewisse Totzone vorhanden ist.

Aus dem deutschen Gebrauchsmuster DE 295 02 329.5 U1 ist eine Reflexionslichttasteinrichtung bekannt, die in einer Aussparung einer Wand angeordnet ist. Diese Reflexionslichttasteinrichtung dient insbesondere zum Auslösen der Spülung einer Toiletteneinrichtung. Die Wandaussparung, in welcher die Elemente angeordnet sind, ist mit einer Abdeckung versehen, die eine Sendelinse und eine Empfangslinse aufweist. Bei dem Ausführungsbeispiel nach Fig. 3 ist in der Wandaussparung ein weiterer Empfänger angeordnet, der hauptsächlich Signale von Objekten im Vordergrund empfängt. Diese Signale werden dem Teil des Doppelempfängers aufaddiert, das dem Fernbereich zugeordnet ist.

Aus der deutschen Offenlegungsschrift DE 36 27 972 A1 ist ein photoelektrischer Taster bekannt, bei dem in einem gemeinsamen Gerätegehäuse zwei Doppelempfänger angeordnet sind, die derart an eine Auswerteeinrichtung angeschaltet sind, dass eine beschränkte Nachweiszone erhalten wird. Speziell sind die beiden Doppelempfänger so miteinander verschaltet, dass eine Nachweiszone durch die Überlappung eines Sendelichtbündels sowie beider Empfangsbereiche der beiden Doppelempfänger definiert ist.

Der Erfindung liegt die Aufgabe zugrunde, einen Reflexionslichttaster der eingangs genannten Art so auszubilden, dass er in der Lage ist, Objekte im Nahbereich zu erkennen, ohne dass die Funktion der Hintergrundausblendung verschlechtert wird.

Diese Aufgabe wird dadurch gelöst, dass in dem Gerätegehäuse außerhalb des Reflexionsstrahlenganges von Lichtsender zu Doppelempfänger ein weiterer Empfänger angeordnet ist, der an ein Addierglied der Auswerteeinrichtung angeschlossen ist, an das auch das dem Nahbereich zugeordnete Teil des Doppelempfängers angeschlossen ist.

Der rein energetisch arbeitende Empfänger ist einem Bereich zugeordnet, der nicht mehr ausreichend von dem Reflexionslichtstrahlengang zu dem Doppelempfänger erfasst ist, insbesondere einem Nahbereich. Der zusätzliche Empfänger führt einerseits zu einer sicheren Erkennung von Objekten in dem Bereich, dem der weitere Empfänger zugeordnet ist, während andererseits der Reflexionslichtstrahlengang so ausgerichtet werden kann, dass die in seinem Bereich befindlichen Objekte sicher erkannt werden, ohne dass die Funktion der Hintergrundausblendung beeinträchtigt ist. Darüber hinaus lässt sich dieser Reflexionslichttaster einfach montieren und auf die gewünschte Tastweite ausrichten. Der erfindungsgemäße Reflexionslichttaster realisiert zwei unterschiedliche Meßprinzipien, ohne daß jedoch dabei der Aufwand erforderlich ist, der für zwei getrennte Reflexionslichttaster erforderlich wäre. Der zusätzliche Empfänger wird von einer einheitlichen Auswerteeinrichtung des Reflexionslichttasters mit ausgewertet, so daß auch nur ein Ausgangssignal geliefert wird, und entsprechend der Anschluß des Reflexionslichttasters an nachfolgende Einrichtungen einfach ist.

Weitere Merkmale und Vorteile der Erfindung ergeben sich aus der nachfolgenden Beschreibung eines in den Zeichnungen dargestellten Ausführungsbeispiels.
- Fig. 1: zeigt die Anordnung eines erfindungsgemäßen Reflexionslichttasters zwischen benachbarten Rollen eines Rollenförderers und
- Fig. 2: ein Blockschaltbild der Auswerteeinrichtung des Reflexionslichttasters nach Fig. 1

Auf einem aus einer Vielzahl benachbarter Förderrollen (10) gebildeten Rollenförderer werden Objekte (11, 12, 13) transportiert, die beispielsweise eine unterschiedliche Breite aufweisen und sich auch in unterschiedlichen Positionen bezüglich der Breite des Rollenförderers befinden.

Zwischen zwei benachbarten Förderrollen (10) ist ein Reflexionslichttaster (14) angeordnet, der die vorbeilaufenden Objekte (11, 12, 13) erkennt und ein entsprechendes Signal gibt, das beispielsweise an eine Zähleinrichtung o.dgl. weitergeleitet wird. Der Reflexionslichttaster (14), der unterhalb der Förderebene des Rollenförderers angeordnet ist, erfaßt die Objekte (11, 12, 13) von unten durch den Spalt zwischen zwei benachbarten Förderrollen (10).

Der im Bereich einer Stirnseite der benachbarten Förderrollen (10) montierte Reflexionslichttaster (14) besitzt ein Gerätegehäuse, in welchem ein Lichtsender (15) angeordnet ist, insbesonder eine infrarotmodulierte LED, deren mittels einer Linse gebündelter Lichtstrahl schräg nach oben gerichtet ist. Die auf vertikale Flächen der Objekte (12, 13) auftreffenden Lichtstrahlen werden zu einer Empfängereinheit (16) reflektiert. Die Empfängereinheit besitzt einen Doppelempfänger, d.h. zwei übereinander angeordnete Fotodioden (17, 18). Ferner besitzt die Empfängereinheit (16) eine Empfängerlinse (19), die eine Sammellinse ist und die die Objekte (12, 13) auf den Fotodioden (17, 18) abbildet. Die näher an dem Reflexionslichttaster (14) befindlichen Objekte (12), d.h. Objekte im sogenannten Nahbereich, werden auf der Fotodiode (17) abgebildet. Die weiter entfernt liegenden Objekte (13), d.h. Objekte (13) im sogenannten Fernbereich, werden auf der Fotodiode (17) und der darüber angeordneten Fotodiode (18) abgebildet. Um die Tastweite des Reflexionslichttasters (14) einzustellen und damit eine Hintergrundausblendung zu erhalten, wird die um eine Querachse schwenkbare Empfängereinheit (16) so justiert, daß ein außerhalb der Tastweite befindliches Objekt im wesentlichen nur auf der Fotodiode (18) abgebildet wird. Hierzu wird an den dem Reflexionslichttaster (14) gegenüberliegende Stirnende der Förderrollen (10) ein reflektierendes Element gehalten, beispielsweise ein weißes Papier. Die Empfängereinheit (16) wird dann so justiert, daß diese Reflexionsstrahlen mehrheitlich auf der oberen Fotodiode (18) abgebildet werden.

Die Empfängereinheit (16) des Reflexionslichttasters (14) reicht nicht aus, um im unmittelbaren Nahbereich befindliche Objekte, beispielsweise das Objekt (11), sicher zu erkennen. Da der Lichtstrahl des Lichtsenders (15) nur auf dem Boden des Objekts (11) auftrifft, reflektiert dieses Objekt (11) nicht in ausreichendem Maße Licht zu der Empfängereinheit (16), um ein sicheres Erkennen zu ermöglichen. Um diese Totzone zu vermeiden, ist der Reflexionslichttaster (14) mit einem weiteren Empfänger (20) ausgerüstet, insbesondere einer Fotodiode mit zugehöriger Linse. Das Gerätegehäuse des Reflexionslichttasters (14) ist im Bereich einer oberen Ecke ausgespart, so daß eine relativ flach nach oben ansteigende Stirnwand vorhanden ist, in deren Bereich der zusätzliche Empfänger (20) angeordnet ist. Der Lichtsender (15) ist zurückgesetzt gegenüber der die Sammellinse (19) der Empfängereinheit (16) enthaltenden Stirnwand in einer relativ steil nach oben ragenden Wand dieser Aussparung angeordnet.

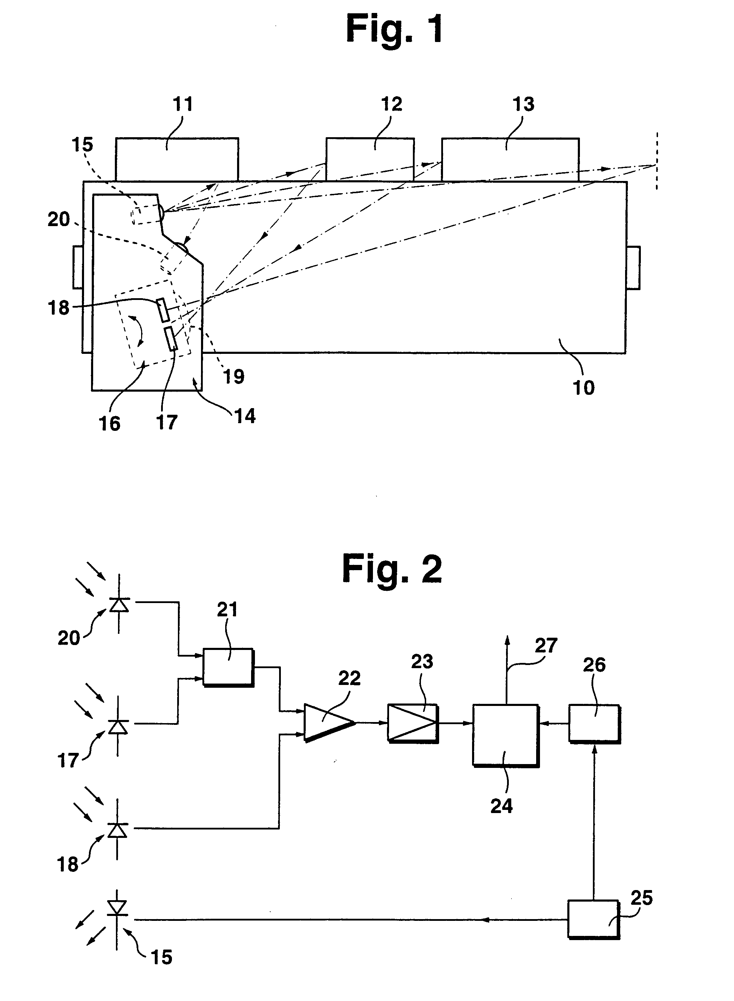

Die Signale des zusätzlichen Empfängers (20) werden mit der gleichen Auswerteeinrichtung ausgewertet, die auch die Signale der Fotodioden (17, 18) auswertet (Fig. 2). Die analogen Signale der dem Nahbereich zugeordneten Fotodiode (17) des Doppelempfängers (16) und die ebenfalls analogen Signale des zusätzlichen Empfängers (20) werden in einem Addierglied (21) addiert. Von dem addierten Signalwert wird das analoge Signal der Fotodiode (18), die dem Fernbereich zugeordnet ist, in einem Differenzbildner (22) subtrahiert. Das jetzt erhaltene Signal wird mittels eines Verstärkers (23) verstärkt und einer Vergleichseinrichtung (24) zugeführt. Der von dem Lichtsender (15) ausgesandte gebündelte Lichtstrahl wird mittels eines Oszillators (25) infrarotmoduliert. An den Oszillator (25) ist ein Impulszähler (26) angeschlossen, der bei Erreichen einer vorgegebenen Impulszahl einen Meßbefehl an die Vergleichseinrichtung (24) abgibt, die dann vergleicht, ob das von dem Verstärker (23) kommende Signal oberhalb oder unterhalb von Vergleichswerten liegt und entsprechend ein Schaltsignal (27) abgibt.

Der zusätzliche Empfänger (20) empfängt das von dem Boden des Objektes (11) reflektierte Licht des Senders (15). Um die Lichtmenge zu erhöhen, die auf den Boden des Objektes (11) auftritt, kann eine asymmetrische Linse für den Sender (15) vorgesehen werden, die zusätzlich zu dem Hauptlichtstrahl einen Teillichtstrahl unter einem steileren Winkel nach oben auf den Boden des Objektes (11) richtet. Es ist auch möglich, dem Empfänger (20) einen eigenen Lichtsender zuzuordnen, so daß der Empfänger (20) an einer anderen Stelle des Gerätegehäuses angeordnet werden kann, zu der das Licht des Senders (15) nicht reflektiert wird.

## Patentansprüche

1. Reflexionslichttaster mit einem Lichtsender, mit einem in einem Reflexionslichtstrahlengang angeordneten und reflektierte Lichtstrahlen empfangenden, mit einem Teil (17) einem Nahbereich zugeordneten und mit einem Teil (18) einem Fernbereich zugeordneten Doppelempfänger und mit einer die Signale des Doppelempfängers auswertenden und Schaltsignale (27) ausgebenden Auswerteeinrichtung, die in einem gemeinsamen Gerätegehäuse untergebracht sind,
**dadurch gekennzeichnet, dass**
in dem Gerätegehäuse außerhalb des Reflexionslichtstrahlenganges von Lichtsender (15) zu Doppelempfänger (17, 18) ein weiterer Empfänger (20) angeordnet ist, der an ein Addierglied (21) der Auswerteeinrichtung angeschlossen ist, an das auch das dem Nahbereich zugeordnete Teil (17) des Doppelempfängers angeschlossen ist.

2. Reflexionslichttaster nach Anspruch 1, **dadurch gekennzeichnet, daß** der weitere Empfänger (20) im Bereich zwischen dem Lichtsender (15) und dem Doppelempfänger (17, 18) angeordnet ist.

3. Reflexionslichttaster nach Anspruch 1 oder 2, **dadurch gekennzeichnet, daß** der weitere Empfänger (20) und der Lichtsender (15) gegenüber der eine Linse (19) für den Doppelempfänger (17, 18) enthaltenden Frontseite des Gerätegehäuses zurückgesetzt sind.

4. Reflexionslichttaster nach Anspruch 3, **dadurch gekennzeichnet, daß** der weitere Empfänger (20) eine schräg nach oben gerichtete optische Achse aufweist.

5. Reflexionslichttaster nach einem der Ansprüche 1 bis 4, **dadurch gekennzeichnet, daß** die optische Achse des Lichtsenders (15) schräg nach oben gerichtet ist.

6. Reflexionslichttaster nach einem der Ansprüche 1 bis 5, **dadurch gekennzeichnet, daß** dem weiteren Empfänger (20) ein eigener Lichtsender zugeordnet ist.

7. Reflexionslichttaster nach einem der Ansprüche 1 bis 6, **dadurch gekennzeichnet, daß** die Auswerteeinrichtung ein die analogen Signale des Teils (17) des Doppelempfängers, der einem Nahbereich zugeordnet ist, und die analogen Signale des weiteren Empfängers (20) addierendes Addierglied (21), einen von dem so erhaltenen Wert die analogen Signale des einem Fernbereich zugeordneten Teils (18) des Doppelempfängers substrahierenden Differenzbildner und eine den verbleibenden Wert mit einem vorgegebenen Wert vergleichende, ein Schaltsignal (27) veranlassende Vergleichseinrichtung (24) enthält.

## Claims

1. Reflected-light detector having an optotransmitter, having a dual receiver, which is arranged in a reflected-light path, receives reflected light rays and has a part (17) associated with a close range and a part (18) associated with a remote range, and having an evaluation device which evaluates the signals of the dual receiver and emits switching signals (27), all accommodated in a common instrument case,
**characterised in that**
an additional receiver (20) is arranged in the instrument case outside the reflected-light path from the optotransmitter (15) to the dual receiver (17, 18) and is connected to a summing element (21) of the evaluation device, to which element the part (17) of the dual receiver which is associated with the close range is also connected.

2. Reflected-light detector according to Claim 1,
**characterised in that** the additional receiver (20) is arranged in the area between the optotransmitter (15) and the dual receiver (17, 18).

3. Reflected-light detector according to Claim 1 or 2,
**characterised in that** the additional receiver (20) and the optotransmitter (15) are set back relative to the front face of the instrument case which contains a lens (19) for the dual receiver (17, 18).

4. Reflected-light detector according to Claim 3,
**characterised in that** the additional receiver (20) has an optical axis which is directed obliquely upward.

5. Reflected-light detector according to any one of Claims 1 to 4, **characterised in that** the optical axis of the optotransmitter (15) is directed obliquely upward.

6. Reflected-light detector according to any one of Claims 1 to 5, **characterised in that** a separate optotransmitter is associated with the additional receiver (20).

7. Reflected-light detector according to any one of Claims 1 to 6, **characterised in that** the evaluation device contains a summing element (21), which sums the analogue signals of the part (17) of the dual receiver which is associated with a close range and the analogue signals of the additional receiver (20), a difference former, which subtracts the analogue signals of the part (18) of the dual receiver which is associated with a remote range from the value which is thus obtained, and a comparator device (24), which compares the remaining value with a predefined value and initiates a switching signal (27).

## Revendications

1. Capteur optique à réflexion avec un émetteur de lumière, avec un double récepteur captant des rayons lumineux disposés et réfléchis dans une trajectoire optique à réflexion, une partie (17) étant affectée à une zone locale et une partie (18) étant affectée à une zone distante, et avec un analyseur évaluant les signaux du double récepteur et émettant des signaux de commutation (27), qui sont logés dans un boîtier d'appareil commun, **caractérisé en ce que** dans le boîtier d'appareil, à l'extérieur de la trajectoire optique à réflexion de l'émetteur de lumière (15) au double récepteur (17, 18), est affecté un récepteur supplémentaire (20) qui est connecté à un additionneur (21) de l'analyseur, auquel est également connecté la partie (17) du double récepteur affecté à la zone locale.

2. Capteur optique à réflexion selon la revendication 1, **caractérisé en ce que** le récepteur supplémentaire (20) est disposé entre l'émetteur de lumière (15) et le double récepteur (17, 18).

3. Capteur optique à réflexion selon la revendication 1 ou 2, **caractérisé en ce que** le récepteur supplémentaire (20) et l'émetteur de lumière (15) sont décalés par rapport à la partie frontale du boîtier d'appareil qui contient une lentille (19) pour le double récepteur (17, 18).

4. Capteur optique à réflexion selon la revendication 3, **caractérisé en ce que** le récepteur supplémentaire (20) comprend un axe optique incliné vers le haut.

5. Capteur optique à réflexion selon l'une des revendications 1 à 4, **caractérisé en ce que** l'axe optique de l'émetteur de lumière (15) est incliné vers le haut.

6. Capteur optique à réflexion selon l'une des revendications 1 à 5, **caractérisé en ce qu'**un propre émetteur de lumière est affecté au récepteur supplémentaire (20).

7. Capteur optique à réflexion selon l'une des revendications 1 à 6, **caractérisé en ce que** l'analyseur contient un additionneur (21) qui additionne les signaux analogiques de la partie (17) du double récepteur, qui est affecté à une zone locale, et les signaux analogiques du récepteur supplémentaire (20), un différentiateur qui soustrait de la valeur ainsi obtenue les signaux analogiques de l'élément (18) du double récepteur affecté à la zone distante et un comparateur qui compare la valeur restante avec une valeur définie et qui déclenche un signal de commutation (27).
